# EUROPEAN PATENT APPLICATION

(11) **EP 4 834 841 A1**
(43) Date of publication of application: **04.11.2026**
(21) Application number: 26174809.9
(22) Date of filing: 27.04.2026
(51) Int. Cl.: C01D 15/02, C22B 5/10, C22B 5/12, C22B 7/00, C22B 15/00, C22B 21/00, C22B 3/00, C22B 26/12, C22B 61/00, H01M 10/54

(54) **A PROCESS FOR RECOVERING LITHIUM FROM ENERGY STORAGE DEVICE MATERIALS, AND COMPOSITIONS THEREOF**

(30) Priority: 28.04.2025 US 202519192143
(71) Applicant: Tesla, Inc., Austin, TX 78725 (US)
(72) Inventor: CARPENTER, Alex E., Austin, TX 78725 (US); SYRING, Baily, Austin, TX 78725 (US); MOSCHELLA, Emily, Austin, TX 78725 (US); SAZALLY, Syaheen, Austin, TX 78725 (US); OROZCO, Darian Estevan, Austin, TX 78725 (US); CALDWELL, Turner Boris, Austin, TX 78725 (US); PARASHAR, Mahima, Austin, TX 78725 (US)
(74) Representative: Zacco Sweden AB

(57) **Abstract**

A method of recovering lithium and/or metals from energy storage device materials is described. The method comprises forming a raw material mixture from energy storage device materials, reducing the raw material mixture to form a reduced mixture; and leaching the reduced mixture to form a leached mixture comprising a solid product and a liquid product, wherein the liquid product comprises lithium hydroxide and the solid product comprises metals.

## Description

### BACKGROUND

### Field

This invention relates to a method for recovering materials from energy storage devices and materials used to form energy storage devices. In particular, the provided method relates to recovering lithium from energy storage devices and recycled material thereof.

### Description of the Related Art

In recent years, the demand for high output energy storage devices (e.g., rechargeable lithium batteries) has increased dramatically, especially with the rapid market growth of electric vehicles (EVs). Large amounts of lithium-containing materials, such as lithium hydroxide monohydrate ("LHM" or LiOH•H₂O), are used in the production of the energy storage devices, especially for cathode active material. Due to the high cost and quantity of raw materials, including lithium, being used, it is essential to prioritize recycling of lithium in energy storage device recycling processes.

Current methods of recycling lithium fail to recover lithium entirely, and/or involve a complex process where dilution, handling losses, and/or impurity accumulation impede lithium recyclability. For example, in typical lithium recovery processes, significant amounts of liquid effluent are generated which must be treated to minimize environmental impacts. In addition, typical lithium recovery processes require high temperatures (e.g., higher than 900°C) for reduction of materials and/or the use of acids for leaching processes.

As such, it would be advantageous to provide an improved process for the recycling of lithium and other valuable elements from energy storage devices and scrap material thereof.

### SUMMARY

For purposes of summarizing the disclosure and the advantages achieved over the prior art, certain objects and advantages of the disclosure are described herein. Not all such objects or advantages may be achieved in any particular embodiment. Thus, for example, those skilled in the art will recognize that the invention may be embodied or carried out in a manner that achieves or optimizes one advantage or group of advantages as taught herein without necessarily achieving other objects or advantages as may be taught or suggested herein.

All of these embodiments are intended to be within the scope of the invention herein disclosed. These and other embodiments will become readily apparent to those skilled in the art from the following detailed description of the preferred embodiments having reference to the attached figures, the invention not being limited to any particular preferred embodiment(s) disclosed.

In one aspect, a method of recovering lithium from energy storage device materials is described. The method includes: forming a raw material mixture from energy storage device materials, wherein the raw material mixture includes a lithium metal oxide; reducing the raw material mixture to form a reduced mixture at a reduction temperature of about 750-900°C, wherein the reduced mixture includes lithium oxide; and leaching the reduced mixture to form a leached mixture including a solid product and a liquid product, wherein the liquid product includes lithium hydroxide.

In some embodiments, reducing the raw material mixture comprises reacting the raw material mixture with a reactant selected from the group consisting of a carbon material, hydrogen gas, and combinations thereof. In some embodiments, the carbon material comprises carbon, carbon monoxide, and combinations thereof. In some embodiments, the raw material mixture comprises the carbon material. In some embodiments, reducing the raw material mixture includes reducing the raw material mixture in the presence of a gas including nitrogen. In some embodiments, the gas is N₂ or a forming gas. In some embodiments, reducing the raw material mixture is performed in a rotary furnace. In some embodiments, reducing the raw material mixture includes continuously removing formed gases. In some embodiments, the formed gases include carbon dioxide.

In some embodiments, the reduction temperature is about 800-850°C. In some embodiments, leaching the reduced mixture further includes adding an additive to the reduced mixture. In some embodiments, the additive includes a compound selected from the group consisting of an alkaline earth metal oxide, an alkaline earth hydroxide, and combinations thereof. In some embodiments, the additive includes CaO, Ca(OH)₂, MgO, Mg(OH)₂, or combinations thereof.

In some embodiments, leaching the reduced mixture includes a leaching wash ratio of at least about 2.8. In some embodiments, leaching the reduced mixture includes leaching the reduced mixture with a leach solution having a pH of at least about 7. In some embodiments, the leached mixture includes a pH of about 12-14.

In some embodiments, the method includes a leaching efficacy of at least about 90%. In some embodiments, the method further includes agitating the leached mixture. In some embodiments, leaching the reduced mixture is performed in an inert atmosphere. In some embodiments, the solid product includes a material selected from the group consisting of a metal, a carbon material, and combinations thereof.

In some embodiments, the method further includes separating the leached mixture to form a separated solid product and a separated liquid product. In some embodiments, separating the leached mixture includes a pressure filtration. In some embodiments, the method further includes treating the separated liquid product to form a lithium product. In some embodiments, treating the separated liquid product includes recrystallizing the lithium hydroxide. In some embodiments, the lithium hydroxide is lithium hydroxide monohydrate.

In some embodiments, forming a raw material mixture includes destructuring or separating the energy storage device materials, or a combination thereof. In some embodiments, the energy storage device materials are selected from the group consisting of anode scrap materials, cathode scrap materials, cell scrap manufacturing materials, cell module scrap materials, end of life device materials, electrolyte materials, and combinations thereof. In some embodiments, the separated solid product includes an element selected from the group consisting of nickel, cobalt, manganese, and combinations thereof.

In some embodiments, the method further includes processing the separated solid product to form a purified solid product and collected impurities. In some embodiments, processing the separated solid product includes a process selected from acid leaching, a solid liquid separating, hydrometallurgical circuit processing, and combinations thereof.

In some embodiments, the raw material mixture includes an active material selected from graphite, LFP, LMFP, NMC, NCA, LMO, LNMO, LCO, LTO, or combinations thereof. In some embodiments, the raw material mixture further includes an additional material selected from the group consisting of a binder, an electrolyte solvent, an electrolyte salt, an anode active material, a current collector material, and combinations thereof.

In another aspect, a leached mixture composition formed from energy storage device materials is described. The leached mixture composition includes: a solid product including a metal and a carbon material, wherein the metal is selected from the group consisting of nickel, cobalt, lithium, aluminum, copper, iron, and combinations thereof; and a liquid product including lithium hydroxide at a concentration of at least about 2000 ppm.

In some embodiments, the solid product includes a D50 particle size of about 20 microns. In some embodiments, a composition of the solid product includes, in wt.%,: C: about 30 to about 60; Li: less than about 1; Ni: about 20 to about 50; Mn: about 0.5 to about 3; Co: about 1 to about 3; Al: about 0.5 to about 3; and Cu: about 1 to about 3.5. In some embodiments, the liquid product includes at least about 90% of lithium of the leached mixture composition.

### BRIEF DESCRIPTION OF THE DRAWINGS

FIG. 1A is a flowchart of a process for recovering lithium from energy storage device material, according to some embodiments.
FIG. 1B is a flowchart of a process for recovering lithium from energy storage device material including a separation step, according to some embodiments.
FIG. 2 is a detailed flowchart of a process for recovering lithium and purified solid products from energy storage device materials, according to some embodiments.
FIG. 3 is another detailed flowchart of a process for recovering lithium from energy storage device material, according to some embodiments.
FIG. 4 is a schematic system for recovering lithium from energy storage device material, according to some embodiments.
FIG. 5 is a detailed flowchart of a process for recovering battery grade lithium and metal products and intermediates from battery materials, according to some embodiments.
FIG. 6 is a plot of the simulated solubility of some lithium containing compounds as a function of temperature.
FIG. 7 are images of example wet shred materials, according to some embodiments.
FIG. 8A is an image of a liquid product, according to some embodiments.
FIG. 8B is an image of a solid product, according to some embodiments.
FIG. 9 is a plot of lithium concentration in the liquid product as a function of leach time, according to some embodiments.
FIG. 10 is a plot of lithium extraction as a function of leach wash ratio, according to some embodiments.
FIG. 11 is a plot of lithium concentration in the liquid product as a function of leach wash ratio, according to some embodiments.
FIG. 12 is a plot of lithium extraction under different carbon reduction temperatures, according to some embodiments.

### DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

The present disclosure is directed at processes to recover lithium, carbon (e.g., graphite) and/or metals (e.g., Ni, Co) from raw material mixtures (e.g., "black mass"), and products thereof. Provided herein are various embodiments related to methods and processes for recovering lithium from energy storage device materials. In some embodiments, the energy storage device materials are any material related to an energy storage device or manufacturing the energy storage device. In some embodiments, the method comprises forming a raw material mixture (i.e., "black mass") from the energy storage device materials, reducing the raw material mixture using a chemical reduction process to form a reduced mixture, and leaching the reduced mixture to form a leached mixture comprising a solid product (e.g., "metal cake") and a liquid product. In some embodiments, the liquid product comprises lithium hydroxide. In some embodiments, the solid product comprises carbon materials (e.g., graphite) and/or metal materials.

In some embodiments, black mass is an intermediate produced in energy storage device (e.g., battery or capacitor) recycling following pre-processing (e.g., discharging, dismantling, mechanical processing (e.g., shredding) and separating (e.g., sieving) of the energy storage device). In some embodiments, black mass includes anode active materials and cathode active materials. In some embodiments, black mass may further include or include trace amounts of other energy storage device components or materials, such as copper, aluminum, plastic separator film, and electrolyte for example.

In some embodiments, the reduction process converts lithium in the energy storage device materials to a soluble lithium-containing compound. In some embodiments, the reduction process comprises a thermal reduction step. In some embodiments, the leaching process is an acid free leaching process. Advantageously, in some embodiments, the thermal reduction process is performed at a relatively low temperature (e.g., less than about 900°C) and/or the acid free leaching process significantly reduces the production of hazardous waste. In addition, in some embodiments, the liquid product contains high-purity lithium hydroxide and/or lithium hydroxide monohydrate for crystallization. In some embodiments, the solid product contains valuable materials such as nickel, cobalt, graphite or combinations thereof. In contrast, previous methods may simultaneously produce a variety of lithium-containing compounds, such as lithium carbonate (e.g., Li₂CO₃) and/or lithium sulfate (e.g., Li₂SO₄) in addition to lithium hydroxide and/or lithium hydroxide monohydrate, which require additional purification before being used in the production of active material for energy storage devices.

In some embodiments, additional advantages of the disclosed processes may include that 1) in some embodiments, lithium recovery is prioritized and recovered prior to reactions to recover metals (e.g., complex hydrometallurgical circuits and acid leaching of black mass) that introduce additional chemicals that would complicate the lithium recover process (e.g., if reactions to recover metals were performed in a composition still containing lithium intended to later be recovered); 2) in some embodiments, lithium may be recovered without the need for reagents or additives aside from water; 3) in some embodiments, the process of recovering lithium produces a collected solid product (e.g., metal cake) that is enriched in carbon and/or metal content, (e.g., graphite, nickel, cobalt, manganese, aluminum, other residual metals, in elemental and/or metal oxide form, and combinations thereof); 4) in some embodiments, the collected solid product formed after the reduction step may have the majority of the oxygen, oxides and/or organic residue (e.g., electrolyte, binder) contained in the raw material mixture removed, which may result in a higher-grade product (e.g., metal cake) that is easier to ship and chemically refine; 5) in some embodiments, the lithium recovery step may function as a mild caustic wash using LiOH that recovers lithium, while also may or may aid in purifying the co-product by removing impurities that are contained in the carbon materials (e.g., graphite) of the raw material mixture such that additional base chemicals (e.g., NaOH) may not be required or their utilization may be reduced; and/or 6) in some embodiments, the resulting collected solid product is chemically reduced, which allows for improved purification (e.g., acid leaching) and reduced or eliminated use of some purification chemicals (e.g., hydrogen peroxide) relative to direct purification of the raw material mixture.

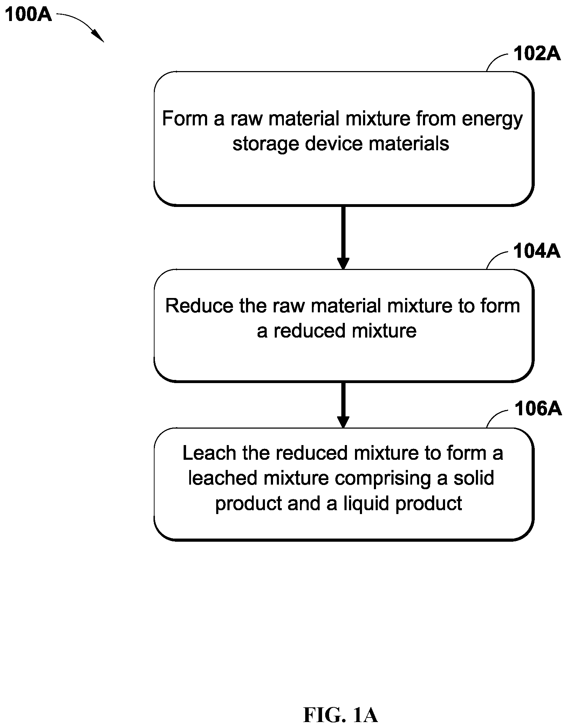

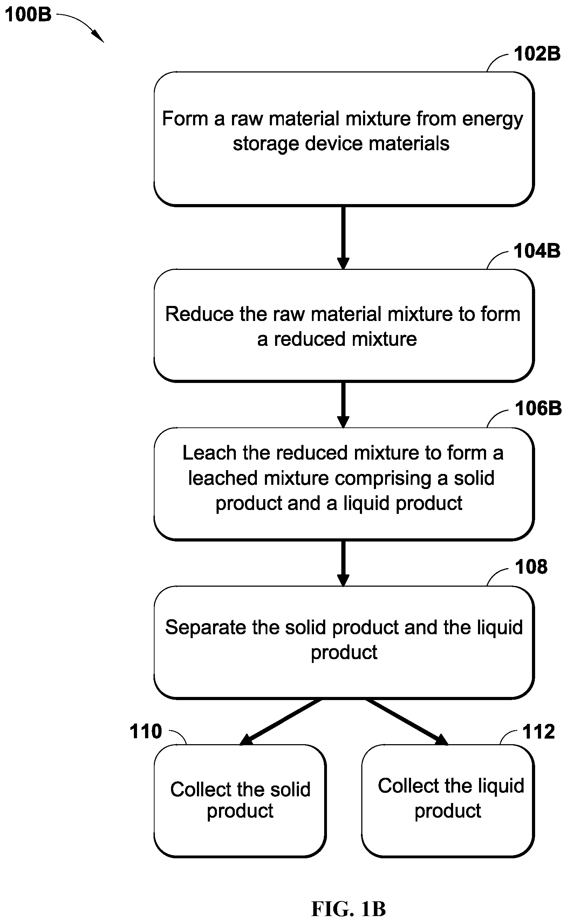

FIG. 1A shows a process 100A for recycling lithium from energy storage device materials according to some embodiments. In process 100A, a raw material mixture (i.e., "black mass") is formed from the energy storage device materials 102A. The raw material mixture is then reduced to form a reduced mixture 104A, and subsequently the reduced mixture is leached to form a leached mixture comprising a solid product and a liquid product 106A. FIG. 1B shows a similar process 100B for recycling lithium from energy storage device materials according to some embodiments, including steps of forming a raw material mixture from energy storage device materials 102B, reducing the raw material mixture to form a reduced mixture 104B, and leaching the reduced mixture to form a leached mixture comprising a solid product and a liquid product 106B. In addition, process 100B includes separating the solid product and the liquid product 108 and thereby collecting the solid product 110 and collecting the liquid product 112. The liquid product may comprise lithium hydroxide and/or lithium hydroxide monohydrate. The solid product (e.g., "metal cake") may comprise graphite, nickel, cobalt, manganese, aluminum, and combinations thereof. In some embodiments, the solid product (e.g., "metal cake") may be absent or substantially absent of lithium, or greatly reduced in lithium content relative to the raw material mixture. As such, in some embodiments, further processing of the solid product may be performed without consideration to how such processing would affect the ability to later extract lithium from the processed solid product.

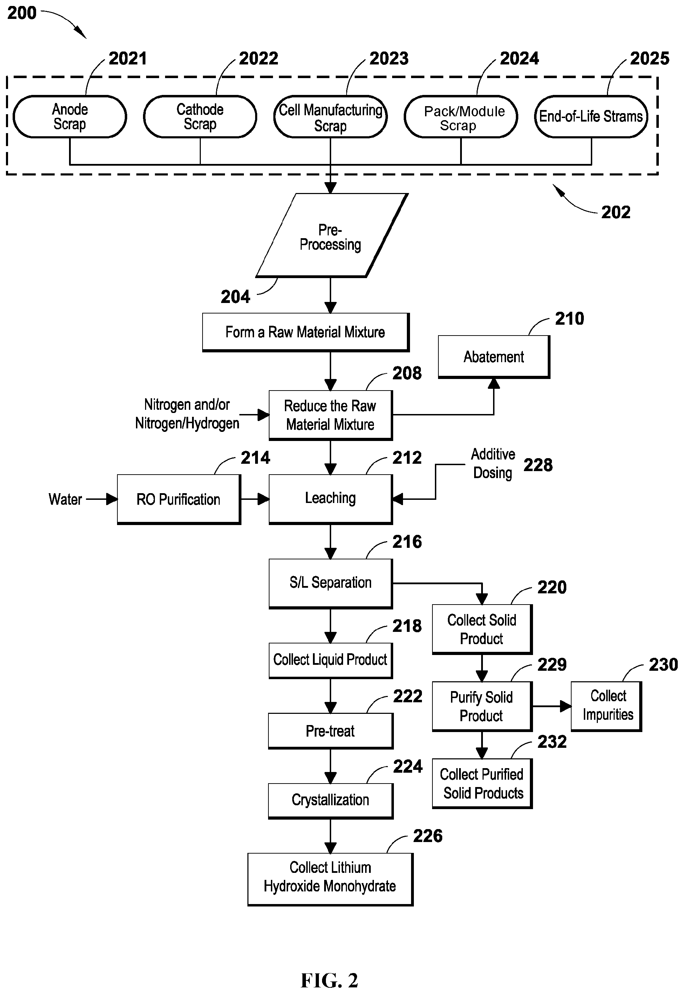

FIG. 2 shows a detailed process 200 for recycling lithium from energy storage device materials according to some embodiments. In process 200, the energy storage device materials are collected 202. The energy storage device materials may include any material related to energy storage device and manufacturing of the energy storage device, such as the end-of-use energy storage devices and the manufacture scrap. For example, with reference to FIG. 2, the energy storage device materials may include the anode scrap 2021, the cathode scrap 2022, the cell manufacturing scrap 2023, the pack or module scrap 2024, the end-of-life streams of the batteries 2025 (i.e., used or spent batteries), and other materials from the spent energy storage device or manufacturing of the energy storage device. The collected energy storage device material is pre-processed 204 to form a raw material mixture 206 (e.g., "black mass"). In some embodiments, the pre-processing may include mixing, shredding, separation, classification, or combinations thereof. The raw material mixture is reduced 208 with a nitrogen and/or nitrogen and hydrogen gas mixture and leached 212 to form a leached mixture comprising a liquid product and a solid product. Water is purified (e.g., in a reverse osmosis process 214) before being used in leaching 212. In some embodiments, the purification of water comprises removing carbon dioxide, metal elements, and/or nitrogen from the water. In some embodiments, an additive 228 is added or dosed to the leaching process 212. The gases from the reducing the raw material mixture in step 208 are processed to remove the hazardous gases that are abated 210. As illustrated in FIG. 2, the leached mixture is separated 216 to form the liquid product and the solid product. The liquid product is collected 218 and pretreated 222. The pre-treated liquid product is then crystallized 224 to form the lithium hydroxide and/or lithium hydroxide monohydrate (e.g., LiOH or LiOH•H₂O), which is then collected 226. The solid product is collected 220. In some embodiments, the solid product is an enriched graphite, Mn, Co and/or Ni product, which can be used in manufacturing of various products. The collected solid product 220 is purified 229 to form collected impurities 230 and collected purified solid products 232.

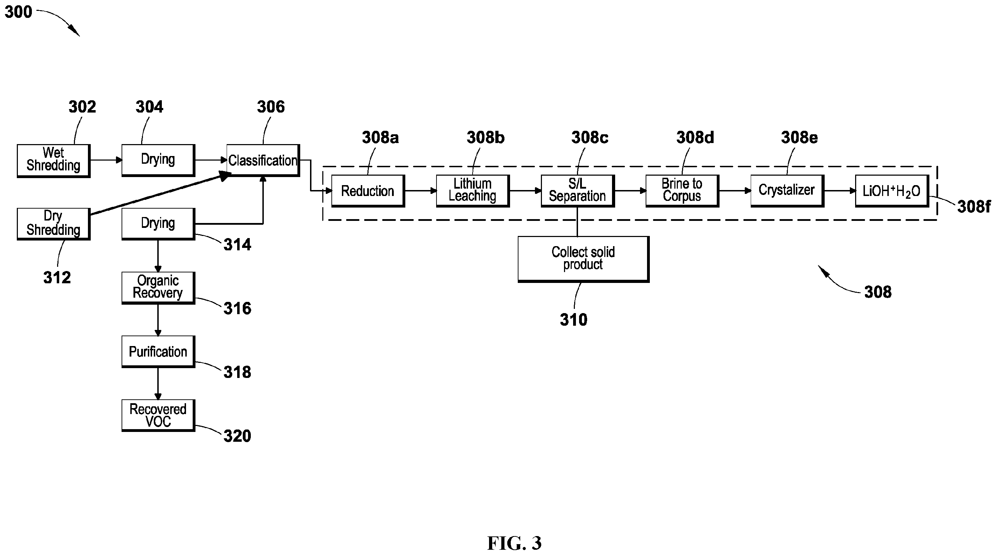

FIG. 3 shows another detailed process 300 for recycling lithium from the energy storage device materials according to some embodiments. In process 300, the energy storage device materials are wet shredded 302 to form the energy storage device material wet shreds. The wet shreds are dried 304 to form the dry shreds. In addition or alternatively, the energy storage device materials are dry shredded 312 to form the dry shreds. The dry shreds from either route are classified 306 to separate the larger shreds from the smaller shreds. The larger and/or smaller shreds are collected to form the raw material mixture to feed to the reduce/leach circuit 308. In addition or alternatively, the volatile organic compound generated during the manufacturing process and/or the lithium recovering process (e.g., drying performed in step 304) is collected 316, purified 318, and recovered 320, and then dried 314, which may be sent for classification 306 and supplied as part of the raw material mixture to the reduce / leach circuit 308. With continued reference to FIG. 3, the raw material mixture is reduced 308a to form a reduced mixture, and then the reduced mixture is leached 308b to form the leached mixture comprising a solid product and a liquid product. The leached mixture is separated 308c to collect the solid product 310 and collect the liquid product 308d (i.e., brine to corpus). In some embodiments, the solid product may comprise graphite, manganese, aluminum, nickel, cobalt, or combinations thereof. The collected liquid product is then supplied to a crystallizer to crystallize the lithium-containing compound 308e. The crystallized lithium-containing compound includes lithium hydroxide monohydrate 308f.

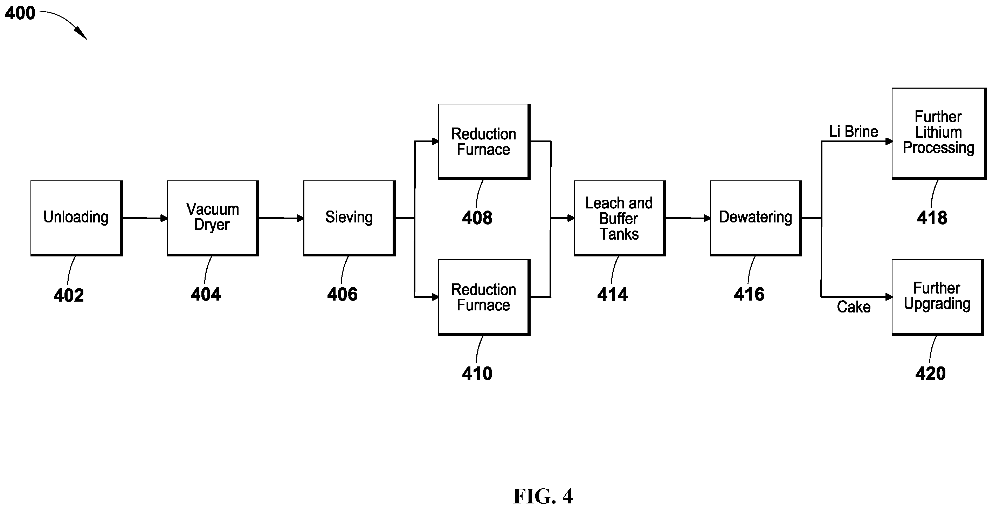

Some embodiments of the present disclosure relate to a system for recovering lithium from energy storage device materials. In some embodiments, a system for recovering lithium from energy storage device materials comprises various apparatuses, stages and/or areas for each step of the process. In some embodiments, a system for recovering lithium from energy storage device materials comprises a reduction furnace and a leach tank. For example, FIG. 4 is a flow diagram of an example system 400 for recovering lithium from energy storage device materials. As illustrated in FIG. 4, the energy storage device materials are unloaded 402 into the system. In some embodiments, the energy storage device materials are pre-processed. The energy storage device materials are then dried at a vacuum dryer 404 and sieved at area sieving apparatus 406. The sieved material is then supplied to reduction furnaces 408, 410. In some embodiments, the system comprises 1, 2, 3, 4, 5, or 10 reduction furnaces. In some embodiments, at least two of the reduction furnaces use different reduction mechanisms. In some embodiments, at least two of the reduction furnaces use the same reduction mechanisms. In some embodiments, the reduction furnace comprises a rotary kiln, a rotary furnace, a roller hearth kiln, a roller hearth furnace, a batch furnace, a batch drum furnace, or a crucible pusher kiln. The reduced material is then fed to the leach and buffer tank 414 to form the leached product. In some embodiments, the leach and buffer tank 414 comprises a high shear recirculating pump to facilitate the dispersion of the reduced mixture. The leached product is then dewatered at a separator 416 to form the solid product and the liquid product. The liquid product, such as a lithium brine is further processed 418. The solid product may be in the shape of a cake and is further upgraded 420.

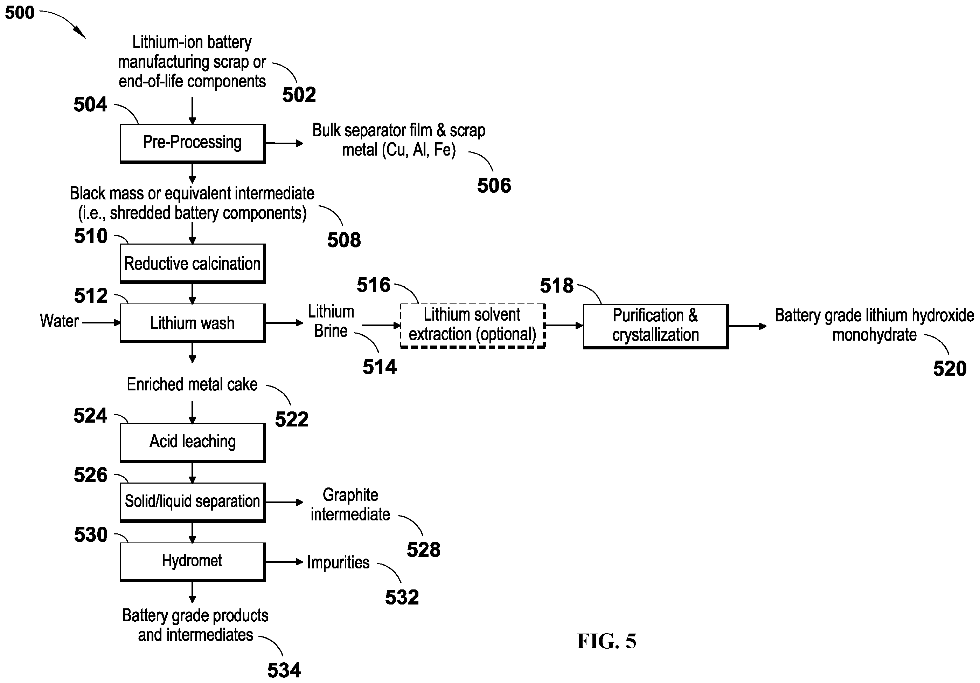

FIG. 5 is a detailed process 500 for recovering battery grade lithium and metal products and intermediates from battery materials, according to some embodiments. Lithium-ion battery manufacturing scrap or end-of life components 502 are preprocessed 504 to form bulk separator film and scrap metals (e.g., Cu, Al, Fe) 506 and black mass 508. The reductive calcination 508 is performed on the black mass 508, and a lithium wash 512 with water is subsequently performed to form a lithium brine 514 and an enriched metal cake 522. An optional lithium solvent extraction 516 is performed on the lithium brine, followed by purification and crystallization 518 to form a battery grade lithium hydroxide monohydrate 520. Acid leaching 524 is performed on the enriched metal cake 522, followed by solid/liquid separation 526 to form a graphite intermediate 528. A hydrometallurgical circuit (i.e., "hydromet") 530 is performed on the separated liquid product from the solid/liquid separation 526 to form impurities 532 and battery grade products and intermediates 534.

### Forming the Raw Material Mixture

In some embodiments, the energy storage device materials are collected to form the raw material mixture (e.g., "black mass"). In some embodiments, the energy storage device materials include one or more materials that can be recycled from the manufacturing of the energy storage devices and the end-of-life energy storage device itself. In some embodiments, the energy storage devices include for example, capacitors, batteries, capacitor-battery hybrids and/or fuel cells. In some embodiments, an energy storage device is a lithium-ion battery. Energy storage devices may include an electrolyte, a cathode, an anode, a separator and a housing, wherein the electrolyte, cathode and anode are disposed within the housing. In some embodiments, the energy storage device materials include scrap materials created in the manufacture of energy storage devices. In some embodiments, the energy storage device materials may include the anode scrap, the cathode scrap, the cell manufacturing scrap, the pack or module scrap, the end of life streams of the batteries, and other materials from the group consisting of a binder, an electrolyte solvent, an electrolyte salt, an anode active material, a cathode active material, a current collector material, and combinations thereof.

In some embodiments, forming the raw material mixture comprises pre-processing the collected energy storage device materials. In some embodiments, pre-processing the collected energy storage device materials comprises reducing the size of the collected energy storage device materials. In some embodiments, reducing the size of the collected energy storage device materials comprises destructuring, such as shredding. In some embodiments, shredding the energy storage device materials comprises wet shredding, dry shredding, or a combination thereof. In some embodiments, the wet shredding comprises shredding the energy storage device materials in a liquid, such as water, a solution, an acid, a base, or combinations thereof. In some embodiments, the liquid used in the wet shredding comprises a salt, such as sodium chloride. In some embodiments, the wet shredded energy storage device materials are dried. In some embodiments, drying the wet shredded energy storage device materials is performed at a temperature of, of about, of at least, of at least about, of at most, of at most about, 50°C, 100°C, 110°C, 120°C, 125°C, 130°C, 135°C, 140°C, 145°C, 150°C, 160°C, 170°C, 180°C, 190°C, 200°C, 210°C, 220°C, 230°C, 240°C, 250°C, 260°C, 270°C, 280°C, 290°C, 300°C, 350°C, or any range of values therebetween, such as 50 °C-350°C, 100°C-350°C, 125°C-350°C, 125 °C-300°C, 125°C-150°C, 150°C-300°C, or any other ranges. In some embodiments, the dried shred comprises a moisture content of, of about, of at most, of at most about, 0.1 wt.%, 0.2 wt.%, 0.5 wt.%, 1 wt.%, 1.5 wt.%, 2 wt.%, 2.5 wt.%, 3 wt.%, 3.5 wt.%, 4 wt.%, 4.5 wt.%, 5 wt.%, or any range of values therebetween.

In some embodiments, the pre-processing comprises classifying the shredded energy storage device materials to identify and remove the oversized components. In some embodiments, the oversized components are components that cannot pass a filter or sieve having a mesh size of, of about, of at least, of at least about, of at most, of at most about, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 3 mm, or any range of values therebetween. In some embodiments, the oversized components are components having a D50 size of, of about, of at least, of at least about, of at most, of at most about, 0.1 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 3 mm, or any range of values therebetween.

In some embodiments, the raw material mixture comprises Li, Cu, Al, Co, Ni, Mn, Mg, Fe, Zn, Ti, Ca, Cr, or combinations thereof. In some embodiments, the raw material mixture comprises a lithium of, of about, of at least, of at least about, of at most, of at most about, 0.1 wt%, 0.5 wt%, 1 wt%, 1.2 wt%, 1.4 wt%, 1.5 wt%, 1.6 wt%,1.7 wt%, 1.8 wt%, 1.9 wt%, 2 wt%, 2.1 wt%, 2.2 wt%, 2.3 wt%, 2.4 wt%, 2.5 wt%, 2.9 wt%, 3 wt%, 3.5 wt%, 4 wt%, 4.5 wt%, 5 wt%, 5.5wt%, 6 wt%, 7 wt%, 8wt%, 9 wt%, 10 wt%, 15 wt%, 20 wt%, or any ranges therebetween. In some embodiments, the raw material mixture comprises a nickel of, of about, of at least, of at least about, of at most, of at most about, 1 wt%, 5 wt%, 10 wt%, 12 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 29 wt%, 30 wt%, 35 wt%, 40 wt%, 45 wt%, 50 wt%, 55wt%, 60 wt%, 70 wt%, 80 wt%, or any ranges therebetween. In some embodiments, the raw material mixture comprises a cobalt of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, 15 wt%, 20 wt%, or any ranges therebetween. In some embodiments, the raw material mixture comprises a copper of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, 15 wt%, 20 wt%, or any ranges therebetween. In some embodiments, the raw material mixture comprises an aluminum of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, or any ranges therebetween. In some embodiments, the raw material mixture comprises a copper of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, or any ranges therebetween. In some embodiments, the raw material mixture comprises an iron of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, or any ranges therebetween. In some embodiments, the raw material mixture comprises a carbon of, of about, of at least, of at least about, of at most, of at most about, 5 wt%, 5.5 wt%, 6 wt%, 7 wt%, 8wt%, 9 wt%, 10 wt%, 15 wt%, 20 wt%, 25 wt%, 30 wt%, 40 wt%, 45 wt%, 50 wt%, or any ranges therebetween.

### Reducing the Raw Material Mixture

The raw material mixture is chemically reduced (e.g., by reductive calcination) in order to form a reduced compounds that may be extracted. For example, in some embodiments, the reduction process is performed such that lithium from the raw material mixture may be preferably reduced into lithium compounds with high water solubility (e.g., Li₂O) relative to lithium compounds with low water solubility (e.g., Li₂CO₃) in order to have a high lithium extraction efficiency in a collected liquid product after leaching and solid liquid separation. In some embodiments, reducing the raw material mixture comprises a carbon reduction process, a hydrogen reduction process, or a combination thereof. In some embodiments, reducing the raw material mixture comprises reacting the raw material mixture with a reactant selected from the group consisting of a carbon material, hydrogen gas, and combinations thereof. In some embodiments, the metal elements in the raw material mixture, such as the metal elements from the active material (e.g., anode and/or the cathode active material), are reduced to form elemental metal, metal oxide, metal carbonate, metal hydroxide, or combinations thereof. In some embodiments, the reduction process is performed to allow carbon to reduce a cathode material (e.g., reduction is performed at temperatures above 600°C). In some embodiments, the reduction process is performed to convert Li₂CO₃ into Li₂O (e.g., reduction is performed at temperatures of about 820°C-850°C, or 830°C). In some embodiments, the reduction process is performed to avoid or avoid substantial sublimation of Li₂O, which as a purified product has an onset of sublimation of about 800°C. In some embodiments, the reduction process is performed to avoid or avoid substantial formation of Li₂CO₃ (e.g., reduction is performed while purging to avoid or avoid substantially partial pressure of CO₂, wherein CO₂ can react with lithium oxides to form Li₂CO₃).

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO₄ or "LFP"), lithium manganese iron phosphate (e.g., LiMn_{0.6}Fe_{0.4}PO₄ or "LMFP"), lithium nickel manganese cobalt oxide (i.e., LiNiₓMn_{y}Co_{1-x-y}O₂ or "NMC"), lithium nickel cobalt aluminum oxide (i.e., LiNiₓCo_{y}Al_{z}O₂ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO₄ (i.e., "lithium iron phosphate" and "LFP") and LiMn₁₋ₓFeₓPO₄ (i.e., "lithium manganese iron phosphate" and "LMFP") (e.g., LiMn_{0.6}Fe_{0.4}PO₄ or LiMn_{0.8}Fe_{0.2}PO₄). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the metal elements in the raw material mixture comprises Li, Cu, Al, Co, Ni, Mn, Mg, Fe, Zn, Ti, Ca, Cr, or combinations thereof. For example, in some embodiments, the lithium element in the raw material mixture is reduced to metallic lithium, lithium carbonate, lithium oxide, lithium hydroxide, or combinations thereof. In some embodiments, the cobalt element in the raw material mixture is reduced to metallic cobalt, cobalt carbonate, cobalt oxide, cobalt hydroxide, or combinations thereof. In some embodiments, the aluminum element in the raw material mixture is reduced to metallic aluminum, aluminum carbonate, aluminum oxide, aluminum hydroxide, or combinations thereof. In some embodiments, the nickel element in the raw material mixture is reduced to metallic nickel, nickel carbonate, nickel oxide, nickel hydroxide, or combinations thereof.

In some embodiments, the carbon reduction process comprises heating the raw material mixture with a carbon material. In some embodiments, the carbon material comprises elemental carbon, carbon monoxide, and combinations thereof. In some embodiments, the carbon material in the carbon reduction process is elemental carbon. In some embodiments, the carbon material in the carbon reduction process is in the raw material mixture. In some embodiments, the carbon material in the carbon reduction process is from the electrodes of the energy storage devices or manufacturing of the electrodes. For example, the carbon material in the carbon reduction process is from the anode of the energy storage device. For example, the anode active material may comprise a carbon-containing material, such as synthetic graphite, natural graphite, hard carbon, soft carbon, graphene, mesoporous carbon, silicon carbide, graphite and silicon comprising composites, composites of the aforementioned materials, or combinations thereof. In some embodiments, no additional carbon material is added in the carbon reduction process. In some embodiments, the carbon reduction process comprises adding an additional carbon material into the raw material mixture.

In some embodiments, the carbon reduction process converts the metal elements in the electrode active material, such as cathode active material to elemental metal, metal oxide, metal carbonate, or combinations thereof. For example, the raw material mixture may comprise a lithium nickel cobalt aluminum oxide (LNCA or NCA, e.g., Li(NiₓCo_{y}Al_{1-x-y})O₂ where x and y are above zero), and the carbon reduction process comprises reactions according to the equations below:

Li(NiₓCo_{y}Al_{1-x-y})O₂ + C→Li₂CO₃ + Ni + Co + Al₂O₃ + CO₂ Equation 1

Li(NiₓCo_{y}Al_{1-x-y})O₂ + C → Li2O + Ni + Co + Al₂O₃ + CO Equation 2

Li₂CO₃ →Li₂O + CO₂ Equation 3

CO₂ + C → 2CO Equation 4

It is to be understood that similar reactions may occur with other cathode active materials, such as NMC.

In some embodiments, the reactions according to Equation 1 and Equation 2 occur at temperatures above about 600°C (e.g., 600°C-750°C). In some embodiments, a temperature higher than about 750°C (e.g., 820°C-850°C, or 830°C) in the carbon reduction process may lead to the decomposition of lithium carbonate (with a low relatively solubility in water) to lithium oxide (with a high solubility in water) and carbon dioxide, such as according to Equation 3. In some embodiments, a relative high temperature, such as a temperature higher than about 750°C (e.g., 820°C-850°C, or 830°C), may lead to the Bouduoard reaction to react carbon dioxide (e.g., which may react with lithium oxide to form lithium carbonate) form carbon monoxide (e.g., which does not react with lithium oxide to form lithium carbonate), such as according to Equation 4.

In some embodiments, the temperature for performing the carbon reduction process is, is about, is at least, is at least about, is at most, is at most about, 600°C, 650°C, 660°C, 670°C, 680°C, 690°C, 700°C, 710°C, 720°C, 730°C, 740°C, 750°C, 760°C, 770°C, 780°C, 790°C, 800°C, 810°C, 820°C, 830°C, 840°C, 850°C, 860°C, 870°C, 900°C, 1000°C, or any range of values therebetween. For example, in some embodiments, the carbon reduction process is performed in a temperature range of, of about 400 °C-1000°C, 400 °C-900°C, 500 °C-900°C, 600 °C-900°C, 700 °C-900°C, 750°C-900°C, 800 °C-850°C, 820 °C-850°C, 650 °C-750°C, 500°C-750°C, or any ranges therebetween. In some embodiments, the temperature for carbon reduction process is about 830°C. In some embodiments, the temperature for carbon reduction process is no greater than about 900°C. In some embodiments, the temperature in the reduction process disclosed herein does not need to be high enough (e.g., > 900°C) to fully reduce the lithium in the raw material mixture to lithium hydroxide. In some embodiments, a reduction temperature of no less than about 750 °C is preferred for forming lithium oxide. In some embodiments, the reduced raw mixture comprises lithium carbonate in addition to lithium oxide and/or lithium hydroxide. In some embodiments, a high temperature in reduction may lead to excessive sintering and is costly.

In some embodiments, the hydrogen reduction process comprises heating the raw material mixture with hydrogen-containing gas. In some embodiments, the hydrogen-containing gas comprises hydrogen gas at a concentration of, of about, of at least, of at least about, of at most, of at most about, 0.5 vol.%, 1 vol.%, 1.5 vol.%, 2 vol.%, 2.5 vol.%, 3 vol.%, 3.5 vol.%, 4 vol.%, 4.5 vol.%, 5 vol.%, 5.5 vol.%, 6 vol.%, 6.5 vol.%, 7 vol.%, 7.5 vol.%, 8 vol.%, 8.5 vol.%, 9 vol.%, 9.5 vol.%, 10 vol.%, 20 vol.%, 30 vol. %, 40 vol. %, 50 vol. %, 60 vol. %, 70 vol. %, 80 vol. %, 90 vol. %, 95 vol. %, or 100 vol. %, or any range of values therebetween.

In some embodiments, the hydrogen reduction process converts the metal elements in the electrode active material, such as cathode active material to elemental metal, metal oxide, metal hydroxide, or combinations thereof. For example, in some embodiments, the raw material mixture comprises a lithium nickel cobalt aluminum oxide (LNCA or NCA, e.g., Li(NiₓCo_{y}Al_{1-x-y})O₂ where x and y are above zero), and the hydrogen reduction process comprises a reaction process according to Equation 5:

Li(NiₓCo_{y}Al_{1-x-y})O₂ + H₂ → LiOH + Ni + Co + Al₂O₃ + H₂O Equation 5

In some embodiments, the temperature for performing the hydrogen reduction process is, is about, is at least, is at least about, is at most, is at most about, 200°C, 250°C, 300°C, 350°C, 400°C, 425°C, 450°C, 475°C, 500°C, 525°C, 550°C, 575°C, 600°C, 650°C, or 700°C, or any range of values therebetween. For example, in some embodiments, the carbon reduction process is performed in a temperature range of, of about 200 °C-700°C, 200 °C-600°C, 200°C-550°C, 200 °C-525°C, 300 °C-600°C, 350°C-600°C, 400 °C-600°C, 400 °C-550°C, 400°C-525°C, 425 °C-525°C, 450°C-525°C, 475°C-525°C, or any ranges therebetween.

Reduction of the raw material mixture may be performed in an atmosphere that includes a gas. In some embodiments, the gas includes a reducing gas, an inert gas or combinations thereof. In some embodiments, the inert gas includes nitrogen, argon, or combinations thereof. In some embodiments, the reducing gas includes hydrogen methane, natural gas, propane, butane, carbon monoxide, and combinations thereof. In some embodiments, the concentration of the reducing gas is, is about, is at most, or is at most about, 0.5 vol.%, 1 vol.%, 1.5 vol.%, 2 vol.%, 2.5 vol.%, 3 vol.%, 3.5 vol.%, 4 vol.%, 4.5 vol.%, 5 vol.%, 5.5 vol.%, 6 vol.%, 6.5 vol.%, 7 vol.%, 7.5 vol.%, 8 vol.%, 8.5 vol.%, 9 vol.%, 9.5 vol.%, 10 vol.%, 20 vol.%, 30 vol. %, 40 vol. %, or 50 vol. %, or any range of values therebetween. In some embodiments, reducing the raw material mixture is performed under a mixture of gasses. In some embodiments, for example, reducing the raw material mixture is performed under a mixture of an inert gas, and/or a reducing gas. In some embodiments, reducing the raw material mixture is performed in a forming gas (i.e., 1-5 vol% H₂ in N₂ gas).

In some embodiments, reducing the raw material mixture comprises continuously removing (i.e., purging) formed gases from the reaction space, such as the furnace. In some embodiments, the formed gas comprises carbon dioxide, water vapor, carbon monoxide, and combinations thereof. In some embodiments, the carbon dioxide generated during the reduction may lead to the formation of lithium carbonate, and therefore is preferentially removed.

In some embodiments, the duration of reducing the raw material mixture (i.e., residence time) is, is about, is at least, is at least about, is at most, is at most about, 10 min, 30 min, 40 min, 50 min, 60 min, 1.1 h, 1.2 h, 1.5 h, 2 h, 2.5 h, 3 h, 3.5 h, 4 h, 4.5 h, 5 h, 5.5 h, 6 h, 7 h, 8 h, 9 h, 10 h, 15 h, or any range of values therebetween. For example, in some embodiments, the duration of reducing the raw material mixture is, is about, 2-4 h. In some embodiments, reducing the raw material mixture helps accelerate the leaching rate of the raw material mixture. In some embodiments, the duration of reducing the raw material mixture is balanced against the reduction temperature (e.g., in order to preferentially form Li₂O, prevent sublimation of Li₂O, and/or prevent formation of Li₂CO₃).

In some embodiments, the reduced raw material mixture comprises Li, Cu, Al, Co, Ni, Mn, Mg, Fe, Zn, Ti, Ca, Cr, or combinations thereof. In some embodiments, the reduced mixture comprises metallic Co, metallic Ni, Co and Ni alloy, aluminum oxide, lithium hydroxide, lithium oxide, lithium carbonate, or combinations thereof. In some embodiments, the reduced raw material mixture comprises a lithium of, of about, of at least, of at least about, of at most, of at most about, 0.5 wt%, 1 wt%, 1.2 wt%, 1.4 wt%, 1.5 wt%, 1.6 wt%,1.7 wt%, 1.8 wt%, 1.9 wt%, 2 wt%, 2.1 wt%, 2.2 wt%, 2.3 wt%, 2.4 wt%, 2.5 wt%, 2.9 wt%, 3 wt%, 3.5 wt%, 4 wt%, 4.5 wt%, 5 wt%, 5.5wt%, 6 wt%, 7 wt%, 8wt%, 9 wt%, 10 wt%, 15 wt%, 20 wt%, or any ranges therebetween. In some embodiments, the reduced raw material mixture comprises a nickel of, of about, of at least, of at least about, of at most, of at most about, 1 wt%, 5 wt%, 10 wt%, 12 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 29 wt%, 30 wt%, 35 wt%, 40 wt%, 45 wt%, 50 wt%, 55wt%, 60 wt%, 70 wt%, 80 wt%, or any ranges therebetween. In some embodiments, the reduced raw material mixture comprises a cobalt of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, 15 wt%, 20 wt%, or any ranges therebetween. In some embodiments, the reduced raw material mixture comprises a copper of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, 15 wt%, 20 wt%, or any ranges therebetween. In some embodiments, the reduced raw material mixture comprises an aluminum of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, or any ranges therebetween. In some embodiments, the reduced raw material mixture comprises a copper of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, or any ranges therebetween. In some embodiments, the reduced raw material mixture comprises an iron of, of about, of at least, of at least about, of at most, of at most about, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8wt%, 9 wt%, 10 wt%, or any ranges therebetween. In some embodiments, the reduced raw material mixture comprises a carbon of, of about, of at least, of at least about, of at most, of at most about, 5 wt%, 5.5 wt%, 6 wt%, 7 wt%, 8wt%, 9 wt%, 10 wt%, 15 wt%, 20 wt%, 25 wt%, 30 wt%, 40 wt%, 45 wt%, 50 wt%, or any ranges therebetween.

In some embodiments, the reduced raw material mixture comprises a D₅₀ particle size of, of about, of at least, or of at least about, 5 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 30 µm, 35 µm, 40 µm, 45 µm, 50 µm, 100 µm, 500 µm, or 1000 µm, or any range of values therebetween. In some embodiments, the reduced raw material mixture comprises a D₁₀ particle size of, of about, of at least, or of at least about, 0.5 µm, 1 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, 3 µm, 4 µm, 5 µm, 6 µm, 7 µm, 8 µm, 9 µm, 10 µm, 15 µm or 20 µm, 30 µm, 40 µm, 50 µm, 100 µm, 200 µm, or 500 µm, or any range of values therebetween. In some embodiments, the reduced raw material mixture comprises a D₉₀ particle size of, of about, of at least, or of at least about, 10 µm, 20 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 55 µm, 60 µm, 70 µm, 80 µm, 90 µm, 100 µm, 200 µm, 300 µm, 400 µm, 500 µm, 1000 µm, 2000 µm, or any range of values therebetween.

The D₅₀ particle size represents the median of particle size distributions, at which 50% of the sample's volume has a smaller particle size, i.e., the D₅₀ particle size splits the distribution with half above and half below this particle size. The D₉₀ particle size represents that 90% of the sample's volume has a smaller particle size than the D₉₀ particle size. The D₁₀ particle size represents that 10% of the sample's volume has a smaller particle size than the D₁₀ particle size.

In some embodiments, reducing the raw material mixture removes any residue organic component and/or decompose the residue electrolyte salt. In some embodiments, reducing the raw material mixture destroys the per- and polyfluoroalkyl substances (PFAS) components in the binder, which reduces the hazardous material to the environment.

### Leaching the Reduced Mixture

In some embodiments, leaching the reduced raw material mixture comprises dissolving a lithium-containing compound in the reduced raw material mixture into an aqueous phase. In some embodiments, the lithium-containing compound in the reduced raw material mixture comprises a lithium carbonate, lithium hydroxide, lithium hydroxide monohydrate, lithium oxide, and combinations thereof. In some embodiments, the lithium oxide is first converted to lithium hydroxide in leaching and then dissolved into the aqueous phase. In some embodiments, leaching the reduced raw material mixture is a non-acidic process, i.e., an acid is not or is not significantly added in the leaching process. In some embodiments, leaching the reduced raw material mixture comprises combining a leaching liquid with the reduced raw material mixture to form a leaching slurry. In some embodiments, the leaching liquid comprises water or a solution. In some embodiments, an acid is not or is not significantly added to the leaching liquid before leaching. In some embodiments, no additive is added to the leaching liquid before leaching, i.e., the leaching liquid used in the leaching is a pure liquid such as a pure water. In some embodiments, an additive is added to the leaching liquid before leaching and/or during leaching. In some embodiments, the additive comprises a compound selected from the group consisting of an alkaline earth metal oxide, an alkaline earth hydroxide, and combinations thereof. In some embodiments, the additive comprises CaO, Ca(OH)₂, MgO, Mg(OH)₂, or combinations thereof. In some embodiments, the additive is in a sub-stoichiometric quantity. In some embodiments, the additive converts the lithium carbonate to lithium hydroxide. Advantageously, adding the additive may reduce the reduction temperature, increase the amount of recovered lithium, and reduce the impurities from the final lithium-containing product. For example, lime (Ca(OH)₂) may react with lithium carbonate to form lithium hydroxide to facilitate the leaching according to Equation 6:

Li₂CO₃ + Ca(OH)₂ → CaCO₃ + 2LiOH Equation 6

In some embodiments, the leaching comprises agitating the leaching slurry. In some embodiments, agitating the leaching slurry comprises shear agitation, tank agitation, or a combination thereof. In some embodiments, the leaching slurry comprises a liquid product and a solid product.

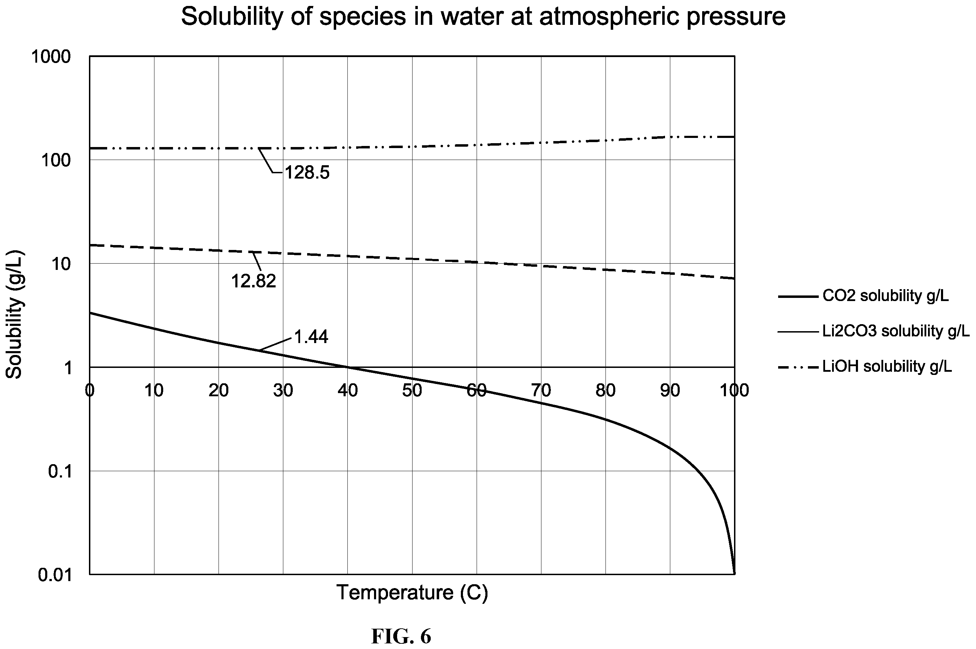

In some embodiments, the leaching is performed at, at about, at least, at least about, at most, at most about, 10°C, 15°C, 20°C, 21°C, 22°C, 23°C, 24°C, 25°C, 26°C, 27°C, 28°C, 29°C, 30°C, 35°C, 40°C, 45°C, 50°C, 55°C, 60°C, 65°C, 70°C, 75°C, 80°C, 85°C, 90°C, 100°C, or any range of values therebetween. In some embodiments, the leaching is performed at room temperature. In some embodiments, the temperature of leaching is at least partially based on the solubility of the lithium-containing compound at a certain temperature. For example, as shown in FIG. 6, the lithium carbonate has a solubility that is negatively correlated with increasing temperature, lithium hydroxide is more soluble with increasing temperature. In addition, lithium hydroxide is significantly more soluble compared to the lithium carbonate at all temperatures. In some embodiments, the leaching slurry has a pH of, of about, of at least, of at least about, of at most, of at most about, 10, 10.5, 11, 11.5, 12, 12.5, 13, 13.5, 14 or any range of values therebetween. In some embodiments, the leaching the reduced mixture is performed in an inert atmosphere, such as in nitrogen or argon.

In some embodiments, the leaching comprises a leaching residence time of, of about, of at least, of at least about, of at most, of at most about, 10 min, 20 min, 30 min, 40 min, 50 min, 1.1 h, 1.2 h, 1.3 h, 1.4 h, 1.5 h, 1.6 h, 1.7 h, 1,8 h, 1.9 h, 2 h, 2.5 h, 3 h, 4 h, 5 h, 6 h, 7 h, 8 h, 9 h, or 10 h, or any range of values therebetween. In some embodiments, the leaching residence time is at least partially based on the amount of liquid used in the leaching. In some embodiments, the leaching residence time is at least partially based on the wash ratio of the leaching process. In this disclosure, the leaching residence time is defined as the time when the lithium concentration in the liquid product is stable or substantially stable, after combining the reduced raw material mixture and the liquid. In some embodiments, the lithium concentration being stable or substantially stable refers to that the lithium concentration does not increase anymore. In some embodiments, the lithium concentration being stable or substantially stable refers to that the lithium concentration does not increase greater than, 5%, 6%, 7%, 8%, 9%, 10%, or 15%, or any range of values therebetween in an hour.

In some embodiments, leaching the reduced raw material mixture comprises a leaching efficacy of, of about, of at least, of at least about, 30%, 35%, 40%, 45%, 50%, 55%, 60%, 65%, 70%, 75%, 80%, 85%, 90%, or 95%, or any ranges of value therebetween. In some embodiments, leaching efficacy is the ratio of the amount of the extracted lithium to the amount of the lithium in the reduced mixture. In some embodiments, the leaching efficacy is calculated by: $\begin{matrix}Leaching Efficacy \\ = \left\{\begin{matrix}\frac{Li amount in liquid product}{Li amount in reduced mixture} \\ + \left(1-\frac{Li amount in solid product}{Li amount in reduced mixture}\right)\end{matrix}\right\} \div 2\end{matrix}$

In some embodiments, a high leaching efficacy can be indicated as the pH is, is about, is at least, is at least about, 7, 8, 9, 10, 11, 11.5, 12, 12.5, 13, 13.5, 14, or any range of values therebetween.

In some embodiments, the weight percentage of the reduced mixture in the leaching is, is about, is at least, is at least about, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt% or any ranges of values therebetween. In some embodiments, leaching the reduced raw material mixture comprises a wash ratio of, of about, of at least, of at least about, at most, at most about, 2.5, 2.6, 2.7, 2.8, 2.9, 3, 3.1, 3.2, 3.3, 3.4, 3.5, 4, 5, 6, 7, 8, 9, 10, or any range of values therebetween. In some embodiments, leaching is less effective when the wash ratio is less than, less than about, 2.5, 2.6, 2.7, or 2.8. In some embodiments, the wash ratio is calculated by: $Wash Ratio = \frac{Weight of Input Water}{Weight of Input Reduced Mixture}$

### Separate the Leached Slurry

In some embodiments, the leached slurry comprises a solid product (e.g., "metal cake") and a liquid product. The leached slurry may be separated to collect the solid product and the liquid product separately. In some embodiments, the separation comprises a physical separation step of the solid product from the liquid product. In some embodiments, the separation comprises filtering. In some embodiments, the filtering uses a filter having a mesh size of, of about, of at least, of at least about, of at most, of at most about, 1 µm, 2 µm, 3 µm, 4 µm, 5 µm, 6 µm, 2 µm, 7 µm, 8 µm, 9 µm, 10 µm, 15 µm, 20 µm, 30 µm, 40 µm, 50 µm, or 100 µm, or any range of values therebetween. In some embodiments, the separation comprises a vacuum filtration. In some embodiments, separation further comprises washing the collected solid product and separate the wash liquid and the solid product. In some embodiments, the wash liquid is added to the liquid product for further processing.

In some embodiments, the solid product comprises a metal and a carbon material. In some embodiments, the solid product comprises a carbon in an amount of, of about, of at least, or of at least about, 20 wt.%, 30 wt.%, 40 wt.%, 45 wt.%, 50 wt.%, 55 wt.%, 60 wt.%, 65 wt.% or 70 wt.%, or any range of values therebetween. In some embodiments, the solid product comprises a metal selected from Li, Al, Ni, Mn, Co, Cu, Fe, Mg, Zn, Ti, Ca, Cr, and combinations thereof. In some embodiments, the solid product comprises a metal selected from Li, Al, Ni, Co, Cu, Fe, and combinations thereof. In some embodiments, the solid product comprises a metal selected from Li, Al, Ni, Co, Cu, and combinations thereof. In some embodiments, the solid product comprises Li in an amount of, of about, of at most, or of at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1 wt.%, 1.2 wt.%, 1.5 wt.%, 2 wt.% or 3 wt.%, or any range of values therebetween. In some embodiments, the solid product comprises Ni in an amount of, of about, of at least, or of at least about, 15 wt.%, 20 wt.%, 25 wt.%, 30 wt.%, 35 wt.%, 40 wt.%, 45 wt.%, 50 wt.% or 55 wt.%, or any range of values therebetween. In some embodiments, the solid product comprises Mn in an amount of, of about, of at least, or of at least about, 0.1 wt.%, 0.5 wt.%, 1 wt.%, 1.5 wt.%, 2 wt.%, 2.5 wt.%, 3 wt.%, 3.5 wt.%, 4 wt.%, 4.5 wt.% or 5 wt.%, or any range of values therebetween. In some embodiments, the solid product comprises Co in an amount of, of about, of at least, or of at least about, 0.1 wt.%, 0.5 wt.%, 1 wt.%, 1.5 wt.%, 2 wt.%, 2.5 wt.%, 3 wt.%, 3.5 wt.%, 4 wt.%, 4.5 wt.% or 5 wt.%, or any range of values therebetween. In some embodiments, the solid product comprises Al in an amount of, of about, of at least, or of at least about, 0.1 wt.%, 0.5 wt.%, 1 wt.%, 1.5 wt.%, 2 wt.%, 2.5 wt.%, 3 wt.%, 3.5 wt.%, 4 wt.%, 4.5 wt.% or 5 wt.%, or any range of values therebetween. In some embodiments, the solid product comprises Cu in an amount of, of about, of at least, or of at least about, 0.1 wt.%, 0.5 wt.%, 1 wt.%, 1.5 wt.%, 2 wt.%, 2.5 wt.%, 3 wt.%, 3.5 wt.%, 4 wt.%, 4.5 wt.% or 5 wt.%, or any range of values therebetween. In some embodiments, the solid product comprises Fe in an amount of, of about, of at least, or of at least about, 0.1 wt.%, 0.5 wt.%, 1 wt.%, 1.5 wt.%, 2 wt.%, 2.5 wt.%, 3 wt.%, 3.5 wt.%, 4 wt.%, 4.5 wt.% or 5 wt.%, or any range of values therebetween. In some embodiments, the solid product comprises Mg, Zn, Ti, Ca and/or Cr in an amount of, of about, of at least, or of at least about, 0.001 wt.%, 0.01 wt.%, 0.05 wt.%, 0.1 wt.%, 0.5 wt.%, 1 wt.%, 1.5 wt.% or 2 wt.%, or any range of values therebetween.

In some embodiments, the solid product comprises a D₅₀ particle size of, of about, of at least, or of at least about, 5 µm, 10 µm, 15 µm, 16 µm, 17 µm, 18 µm, 19 µm, 20 µm, 30 µm, 40 µm, 50 µm, 60 µm, 70 µm, 80 µm, 90 µm, or 100 µm, or any range of values therebetween. In some embodiments, the reduced raw material mixture comprises a D₁₀ particle size of, of about, of at least, or of at least about, 1 µm, 2 µm, 3 µm, 4 µm, 3 µm, 4 µm, 5 µm, 6 µm, 7 µm, 8 µm, 9 µm, 10 µm, 15 µm or 20 µm, 30 µm, 40 µm, or 50 µm, or any range of values therebetween. In some embodiments, the reduced raw material mixture comprises a D₉₀ particle size of, of about, of at least, or of at least about, 10 µm, 20 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 55 µm, 60 µm, 70 µm, 80 µm, 85 µm, 90 µm, 100 µm, 200 µm, 300 µm, 400 µm, 500 µm, 1000 µm, 2000 µm, or any range of values therebetween.

In some embodiments, the liquid product comprises lithium. In some embodiments, the liquid product comprises a metal selected from Li, Al, Na, Si, W, P, S, Ni, B, Cu, and combinations thereof. In some embodiments, the liquid product comprises Li and/or LiOH in an amount of, of about, of at least, of at least about, 1000 ppm, 1500 ppm, 2000 ppm, 2500 ppm, 3000 ppm, 3500 ppm, 4000 ppm, 4500 ppm, 5000 ppm, 5500 ppm, 6000 ppm, 6500 ppm, 7000 ppm, 7500 ppm, 8000 ppm, 8500 ppm, 9000 ppm, 9500 ppm, 10000 ppm, or any range of values therebetween.

In some embodiments, a lithium product may be crystallized from the liquid product. In some embodiments, the lithium product is selected from lithium hydroxide, lithium hydroxide monohydrate, lithium carbonate, and combinations thereof. In some embodiments, the lithium product is or substantially is lithium hydroxide and/or lithium hydroxide monohydrate. In some embodiments, the weight amount of lithium hydroxide and/or lithium hydroxide monohydrate is, is about, is at least, is at least about, 70 wt.%, 75 wt.%, 80 wt.%, 85 wt.%, 90 wt.%, 91 wt.%, 92 wt.%, 93 wt.%, 94 wt.%, 95 wt.%, 96 wt.%, 97 wt.%, 98 wt.%, 99 wt.%, 100 wt.%, or any range of values therebetween, of the lithium product crystallized from the liquid product.

### Processing the Solid Product

In some embodiments, the collected solid product may be further processed to form one or more purified solid products and to remove impurities. In some embodiments, the processing of the solid product may include an acid leach, a solid liquid separation, a hydrometallurgical circuit, and combinations thereof. In some embodiments, a purified solid product includes graphite, graphite, manganese, aluminum, nickel, cobalt, or combinations thereof.

### Electrode Film Materials and Electrode Films

Electrode film mixtures and electrode films that may be found in energy storage device materials used to form raw material mixtures are described herein. In some embodiments, components of an active layer or electrode film may comprise particles. The particles for forming the active layer or electrode film may be combined with a material to provide an electrode film mixture. In some embodiments, the active layer or electrode film may be formed from the electrode film mixture such that weight percentages of the components of the active layer or electrode film and weight percentages of the components of the electrode film mixture are substantially the same.

An active material (e.g., cathode active material, anode active material) may be used in the preparation of an electrode film and/or electrode for an energy storage device.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO₄ or "LFP"), lithium manganese iron phosphate (e.g., LiMn_{0.6}Fe_{0.4}PO₄ or "LMFP"), lithium nickel manganese cobalt oxide (i.e., LiNiₓMn_{y}Co_{1-x-y}O₂ or "NMC"), lithium nickel cobalt aluminum oxide (i.e., LiNiₓCo_{y}Al_{z}O₂ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO₄ (i.e., "lithium iron phosphate" and "LFP") and LiMn₁₋ₓFeₓPO₄ (i.e., "lithium manganese iron phosphate" and "LMFP") (e.g., LiMn_{0.6}Fe_{0.4}PO₄ or LiMn_{0.8}Fe_{0.2}PO₄). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film includes a binder or binder material. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), acrylic, acrylamide, polyvinylpyrrolidone (PVP), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In some embodiments, the binder comprises a cellulosic binder. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

### Electrodes and Energy Storage Devices

Energy storage systems or devices that may be used to form raw material mixtures are described herein. An energy storage system or device includes a positive electrode (i.e., cathode), a negative electrode (i.e., anode), a separator and an electrolyte positioned within a housing. Each electrode includes an electrode film disposed over a current collector. The electrode includes an electrode film disposed over a current collector. In some embodiments, the current collector is a foil. In some embodiments, the current collector is aluminum foil, a copper foil, or combinations thereof. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween. In some embodiments, an active layer is disposed on each side of the current collector.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF₆), lithium bis(trifluoromethanesulfonyl)imide (LiFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂, lithium difluoro(oxalato)borate (LiC₂BF₂O₄) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt.%, 35 wt.%, 40 wt.%, 45 wt.%, 50 wt.%, 55 wt.%, 60 wt.%, 65 wt.%, 70 wt.%, 75 wt.%, 80 wt.%, 85 wt.% or 90 wt.%, or any range of values therebetween. In some embodiments, solvents are utilized as additives in the electrolyte system, and can be used at a concentration of, of about, of at most, or at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1 wt.%, 1.1 wt.%, 1.2 wt.%, 1.3 wt.%, 1.4 wt.%, 1.5 wt.%, 1.6 wt.%, 1.7 wt.%, 1.8 wt.%, 1.9 wt.%, 2 wt.%, 2.1 wt.%, 2.2 wt.%, 2.3 wt.%, 2.4 wt.%, 2.5 wt.%, 2.6 wt.%, 2.7 wt.%, 2.8 wt.%, 2.9 wt.%, 3 wt.%, 4 wt.%, 5 wt.%, 6 wt.%, 7 wt.%, 8 wt.%, 9 wt.% or 10 wt.%, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments, where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

A method of preparing a rolled electrode assembly may include preparing an electrode assembly and rolling the electrode assembly to form a rolled electrode assembly. The method of forming an energy storage device may include preparing the rolled electrode assembly and disposing the rolled electrode assembly and an electrolyte within a housing.

### EXAMPLES

Example embodiments of the present disclosure, including processes, materials and/or resultant products, are described in the following examples.

### Example 1 - Raw Material Mixture Preparation and Analysis

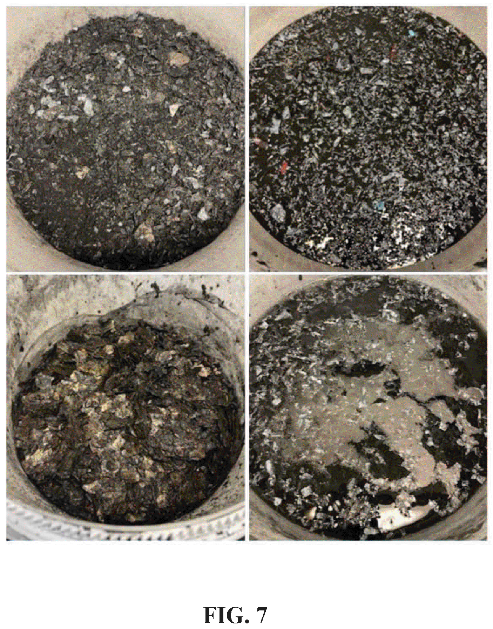

The collected spent lithium ion batteries were pre-processed by wet shredding the spent lithium ion batteries in a solution comprising water and sodium chloride. FIG. 7 show the images of the wet shreds. The wet shreds were dried at a temperature range of 125-150°C to form the dry shreds. In another example, the spent lithium ion batteries are pre-processed by dry shredding the spent lithium ion batteries to form the dry shreds. The dry shreds were sieved to remove the shreds larger than about 1.4 mm. The cathode scrap was also collected and mixed with the filtered dry shreds to form the raw material mixture. Table 1 summarizes the chemical composition of the wet shreds, the dry shreds and the cathode scrap. Table 2 summarizes the physical characteristics of the wet shreds, the dry shreds and the cathode scrap.

**Table 1. Summary of Elemental Concentration of Raw Materials**

| **Element** | **Wet Shreds** | **Dry Shreds** | **Cathode Scrap** |
|---|---|---|---|
| Ni (wt%) | 15-20% | 20-30% | 45-55% |
| Li (wt%) | 1-3% | 2-4% | 6-8% |
| Al (wt%) | 1-3% | 2-4% | 0-1% |
| Cu (wt%) | 3-4% | 4-5% | 0-1% |
| Fe (wt%) | 3-4% | 4-5% | 0-1% |
| Co (wt%) | 1-3% | 2-4% | 6-8% |
| C (wt%) | 20-30% | 30-40% | <1% |

**Table 2. Summary of Physical Characteristics of Raw Material Mixture**

| | **Wet Shreds** | **Dry Shreds** | **Cathode Scrap** |
|---|---|---|---|
| Moisture Content (wt%) | 30-40% | <2% | 0-2% |
| Bulk Density (g/cc) | 0.73 | 0.6-0.8 | 1.8-2.2 |
| Tap Density (g/cc) | / | 0.8-1.0 | 2.2-2.7 |
| BET Surface area (m²/g) | / | / | 1.5-2 |

### Example 2 - Liquid Product and Solid Product Preparation

The raw material mixtures were reduced in a carbon reduction process at a temperature range of 750°C-900°C in an inert environment for 3-4 hours, a hydrogen reduction process at a temperature range of 475°C-525°C in a hydrogen environment for 3-4 hours, or the combination of both, to form the reduced raw material mixture. Tables 3, 4, and 5 are a summary of the chemical composition, the physical characteristics and the particle size distribution of the reduced raw material mixture.

**Table 3. Summary of Elemental Concentration of Reduced Raw Material Mixture**

| **Element** | **Particle Size < 106 µm** | **106 µm < Particle Size <1.4 mm** |
|---|---|---|
| Ni (wt%) | 33.8% ± 1.8% | 35.7% ± 1.0% |
| Li (wt%) | 4.5% ± 0.2% | 5.0% ± 1.1% |
| Al (wt%) | 2.2% ± 0.6% | 3.3% ± 0.7% |
| Cu (wt%) | 0.2% ± 0.1% | 6.0% ± 0.1% |
| Fe (wt%) | 1.6% ± 0.7% | 1.6% ± 1.2% |
| Co (wt%) | 4.6% ± 0.2% | 3.0% ± 1.6% |
| C (wt%) | 40.1% ± 5.3% | 34.2% ± 4.1% |

**Table 4. Summary of Physical Characteristics of Reduced Raw Material Mixture**

| | **Particle Size < 106 µm** | **106 µm < Particle Size <1.4 mm** |
|---|---|---|
| Moisture Content (wt%) | 1.9% ± 0.2% | 0.9% ± 0.7% |
| Bulk Density (g/cc) | 0.7 ± 0.08 | 0.7 ± 0.01 |
| Tap Density (g/cc) | 0.9 ±0.07 | 0.8 ± 0.08 |
| BET Surface area (m²/g) | 1.9% ± 0.2% | 0.9% ± 0.7% |

**Table 5. Summary of Particle Size Distribution of Reduced Raw Material Mixture**

| | **Particle Size < 106 µm** | **106 µm < Particle Size <1.4 mm** |
|---|---|---|
| **D10 (µm)** | 7.6 ± 1.4 | 6.4 |
| **D50 (µm)** | 19.4 ± 2.7 | 18.7 |
| **D90 (µm)** | 42.2 ± 7 | 53.4 |
| **Span (µm)** | 1.8 ± 0.1 | 2.5 |

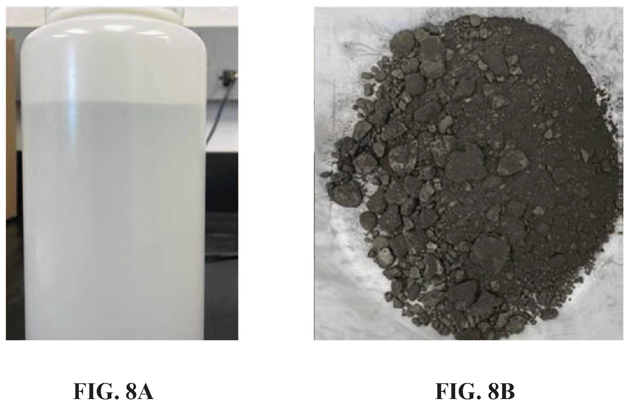

The reduced raw material mixtures were leached with water at room temperature with a residence time of about 1-2 hours to form a leached slurry. The slurry was shear agitated and tank agitated. The leached slurry was separated into a lithium brine product and a solid product by a pressure filtration process. The solid product was washed with water and filtered again, the wash water was captured and added to the lithium brine product. The liquid product (i.e., the lithium brine product) was recrystallized to form the lithium hydroxide monohydrate. FIG. 8A is an image of the lithium brine product. Table 6 is a summary of the average element concentration of 194 lithium brine product samples produced at 1 liter scale. Table 7 is summary of the lithium brine concentration based on solid content for extractions larger than 75%.

**Table 6. Summary of Elemental Concentration of Lithium Brine Product**

| **Element** | **Concentration (ppm)** |
|---|---|
| Li | 3972 |
| Al | 493 |
| Na | 375 |
| Si | 298 |
| W | 120 |
| P | 73 |
| S | 34 |
| Ni | 27 |
| B | 26 |
| Cu | 23 |

**Table 7. Summary of Lithium Concentration and Solid Content in Leach**

| **Solids Content in Leach (wt. %)** | **Li Concentration in Lithium Brine Product (ppm)** |
|---|---|
| 19.3% | 8983 |
| 17.6% | 8013 |
| 16.7% | 7446 |
| 15.4% | 6627 |
| 14.3% | 6037 |
| 13.3% | 5701 |
| 12.5% | 5174 |
| 12.5% | 5091 |
| 11.8% | 5230 |

As summarized in Table 6, the main element in the lithium brine product is lithium. As summarized in Table 7, the lithium concentration in the lithium brine product is at least partially based on the amount of the solid contents in the leach process.

FIG. 8B is an image of the metal alloy product generated from the process. Table 8 is a summary of the average elemental composition of the metal alloy product from 44 samples. The metal alloy products include particles having a particle size less than 106 µm and less than 1.44 mm but greater than 106 µm. As illustrated in Table 8, the alloy product primarily comprises a nickel-cobalt alloy and carbon. The metal alloy products may also comprise small amounts of aluminum oxide, depending on the chemistry of the feed material. Table 9 is a summary of the physical properties of the metal alloy products. Table 10 is a summary of the particle distribution of the metal alloy products.

**Table 8. Summary of Elemental Composition in Metal Alloy Product**

| | **Ni (wt. %)** | **Li (wt. %)** | **Al (wt. %)** | **Cu (wt. %)** | **Fe (wt. %)** | **Co (wt. %)** | **C (wt. %)** |
|---|---|---|---|---|---|---|---|
| **Particle size < 106 µm** | 38% | 1.6% | 2.1% | 0.4% | 1.5% | 3.7% | 40% |
| **Particle size < 1.4 mm** | 36.2% | 1.5% | 3.8% | 6.4% | 3.3% | 4.2% | 34.1% |

**Table 9. Summary of Physical Properties of Metal Alloy Product**

| | | |
|---|---|---|
| **Moisture Content (wt. %)** | 2.6% | 0.8% |
| **Bulk Density (g/cc)** | 0.9 | 0.9 |
| **Tap Density (g/cc)** | 1.2 | 1.1 |

**Table 10. Summary of Particle Size Distribution of Metal Alloy Product**

| | | |
|---|---|---|
| **D10 (µm)** | 7.6 | 6.4 |
| **D50 (µm)** | 19 | 18.7 |
| **D90 (µm)** | 42 | 53.4 |
| **Span (µm)** | 1.8 | 2.5 |

### Example 3 - Analysis of Leaching Process

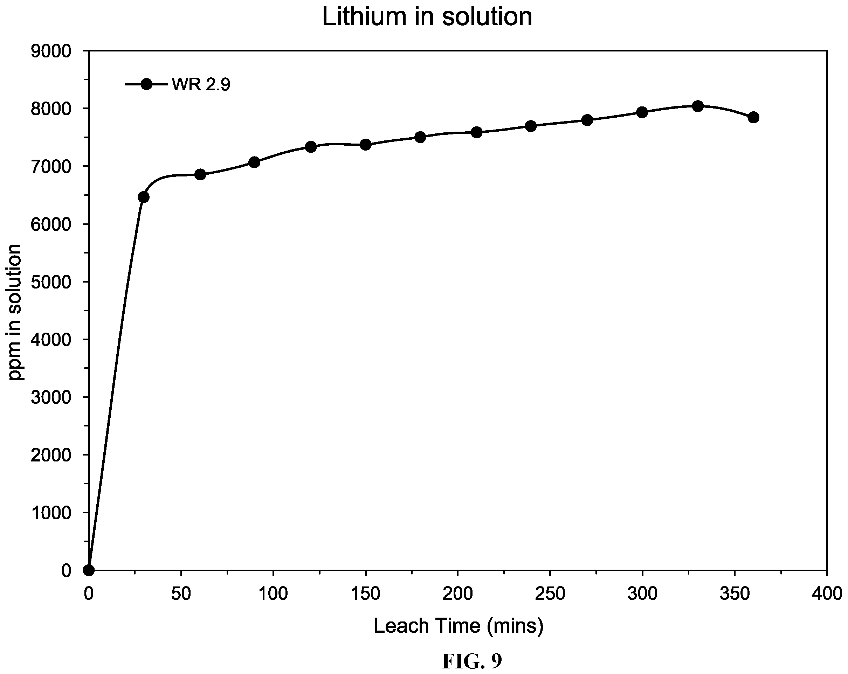

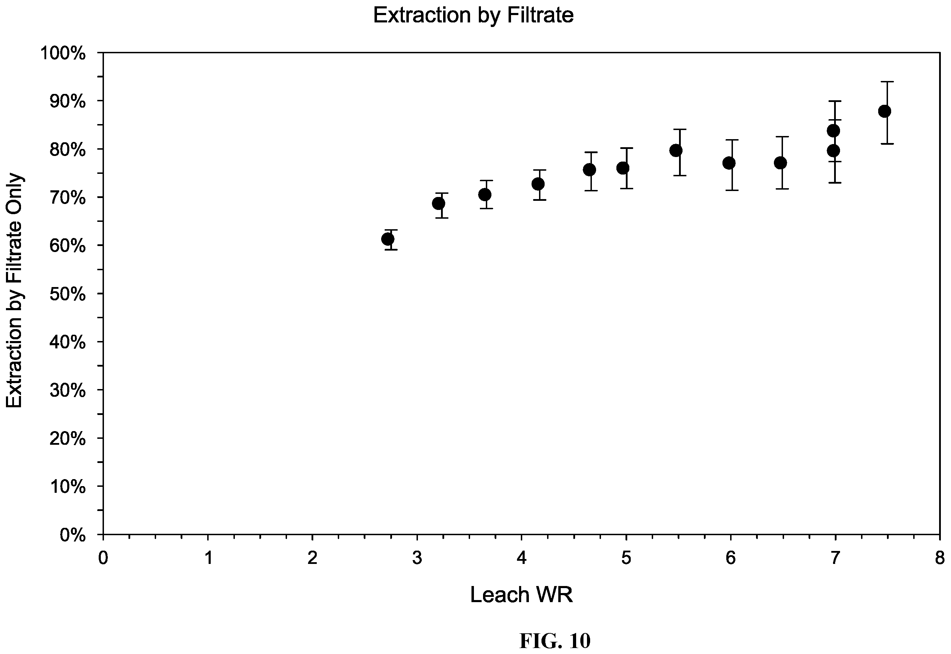

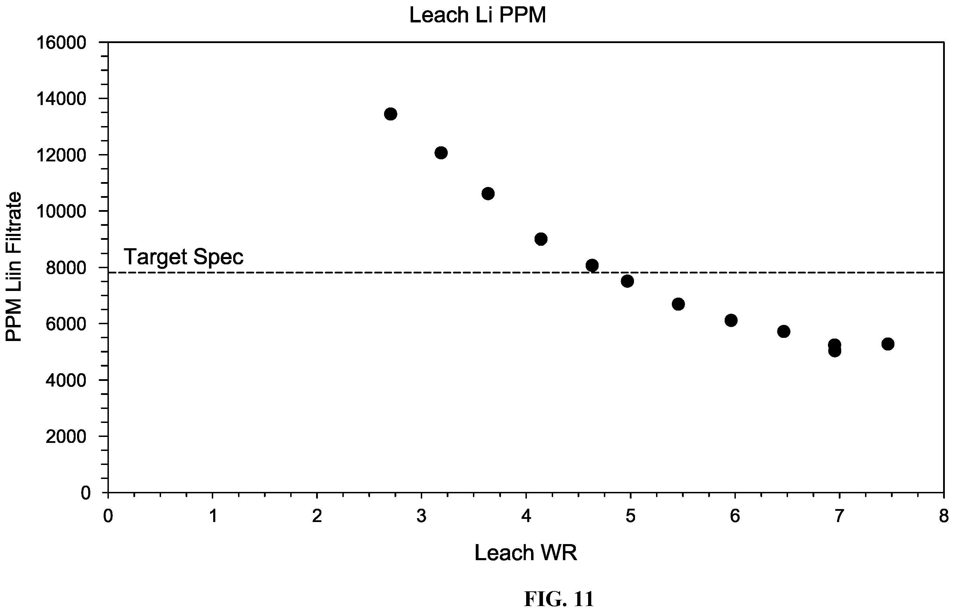

FIG. 9 is a plot of the lithium concentration during the leaching process with different leach time. As illustrate din FIG. 9, the lithium concentration in the liquid product does was relatively stable after about 100 minutes. FIG. 10 is a plot of the lithium extraction vs leach wash ratio. As illustrated in FIG. 10, the lithium extraction increases with the increase of wash ratio. FIG. 11 is a plot of the concentration of lithium in the liquid product v. leach wash ratio. As illustrated in FIG. 11, the lithium concentration increases with the decrease of the wash ratio.

### Example 4 - Analysis of Carbon Reduction Temperature

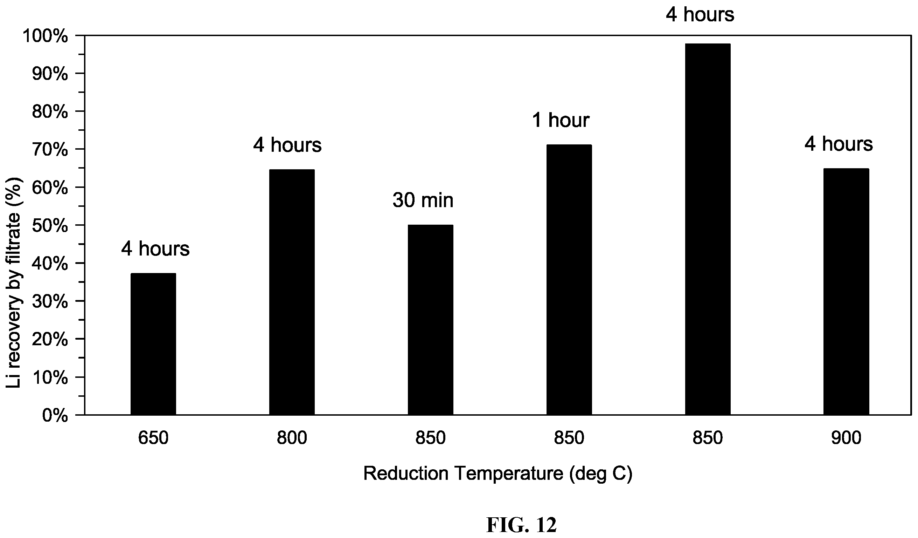

FIG. 12 is a plot of the lithium extraction percentage with the raw material mixture reduced at different temperatures. As illustrated in FIG. 12, the carbon reduction processes performed at a temperature from 650°C to 900°C lead to a lithium extraction of more than 35%. In addition, the carbon reduction process performed at 850°C leads to a lithium extraction of more than 96%.

### Example 5 - Solid Metal Cake Product Characterization

A 1L stainless steel beaker was charged with 600mL of reverse osmosis (RO) water and 50g of reductively calcined black mass to achieve a liquid/solid ratio of 12. The slurry was mixed with an overhead high shear disperser at 9,000 RPM for 1 hour. After 1 hour, the slurry was dewatered. The resulting cake was washed with 100mL of RO water to remove any residual lithium. Samples of the resultant brine, wash and metal cake were retained and analyzed. Resulting lithium recovery to the brine as calculated by the recovered liquid was 85% ± 2% across 80 replicates.

To evaluate lithium wash performance at increased scale, a 50-liter jacketed stirred tank reactor was charged with 15L of RO water and 1.5kg of reductively calcined black mass. The slurry was continuously agitated with an overhead stirrer for 3 hours. After 3 hours, the slurry was dewatered. The resulting metal cake was washed with 1L of RO water. Samples of the lithium brine, wash water, and metal cake were retained and analyzed, with the results shown in Table 11. The resulting lithium wash efficacy was 88.2% as calculated by the recovered liquid, and 80.9% as calculated by the residual lithium in the metal cake (average to 84.5%).

**Table 11. Raw Material and Solid Product Properties**

| | **Black Mass** | **Metal Cake** |
|---|---|---|
| **Bulk Density (g/mL)** | 0.7 | 0.9 |
| **Tap Density (g/mL)** | 0.95 | 1.3 |
| **BET Surface Area (m²/g)** | 1.1 | 8.2 |
| **D10 (µm)** | 10 | 7.3 |
| **D50 (µm)** | 27 | 18 |
| **D90 (µm)** | 175 | 84 |
| **Span (µm)** | 5.6 | 3.7 |
| **Carbon (wt.%)** | 50 | 47 |
| **Li (wt.%)** | 3.1 | 0.75 |
| **Ni (wt.%)** | 24 | 37 |
| **Mn (wt.%)** | 0.96 | 1.5 |
| **Co (wt.%)** | 1.3 | 2.1 |
| **Al (wt.%)** | 0.21 | 1.7 |
| **Cu (wt.%)** | 0.36 | 2.2 |

### Example 6 -Metal Cake Product Acid Leach

A 5L jacketed stirred tank reactor was charged with 1.4 liters of RO water and continuously stirred while heating until stabilized at 90°C. To the preheated water, 0.75kg of black mass or metal cake was added to achieve a 30 weight percent solids slurry. To the slurry, 2 molar sulfuric acid was added at a rate of 40mL/min until a total volume of acid to contained metals equivalent was reached. The slurry was continuously stirred and held at temperature for 6 hours. After 6 hours, the slurry was dewatered, and the resulting cake was rinsed with 1L of RO water. Samples of the resulting leach solution, wash solution and residual cake were analyzed to evaluate acid leaching efficacy, as shown in Table 12. Under identical leaching conditions, metal cake leached more readily in comparison to black mass.

**Table 12. Acid Leaching Efficacy**

| | **Raw Material Efficiency (%)** | **Solid Product Efficiency (%)** |
|---|---|---|
| **Co** | 30.8 | 99.9 |
| **Ni** | 43.4 | 99.9 |
| **Li** | 94.1 | 100 |
| **Co** | 30.8 | 99.9 |

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

## Claims

1. A method of recovering lithium from energy storage device materials, the method comprising:
forming a raw material mixture from energy storage device materials, wherein the raw material mixture comprises a lithium metal oxide;
reducing the raw material mixture to form a reduced mixture at a reduction temperature of about 750-900°C, wherein the reduced mixture comprises lithium oxide; and
leaching the reduced mixture to form a leached mixture comprising a solid product and a liquid product, wherein the liquid product comprises lithium hydroxide.

2. The method of Claim 1, wherein reducing the raw material mixture comprises reacting the raw material mixture with a reactant selected from the group consisting of a carbon material, hydrogen gas, and combinations thereof, optionally wherein the carbon material comprises carbon, carbon monoxide, and combinations thereof, and optionally wherein the raw material mixture comprises the carbon material.

3. The method of any of Claims 1-2, wherein reducing the raw material mixture comprises reducing the raw material mixture in the presence of a gas comprising nitrogen or a forming gas.

4. The method of any of Claims 1-3, wherein reducing the raw material mixture comprises continuously removing formed gases, optionally wherein the formed gases comprise carbon dioxide.

5. The method of any of Claims 1-4, wherein leaching the reduced mixture further comprises adding an additive to the reduced mixture, wherein the additive is selected from the group consisting of an alkaline earth metal oxide, an alkaline earth hydroxide, and combinations thereof, optionally wherein the additive comprises CaO, Ca(OH)2, MgO, Mg(OH)2, or combinations thereof.

6. The method of any of Claims 1-5, wherein leaching the reduced mixture comprises a leaching wash ratio of at least about 2.8.

7. The method of any of Claims 1-6, wherein leaching the reduced mixture comprises leaching the reduced mixture with a leach solution having a pH of at least about 7, optionally wherein the leached mixture comprises a pH of about 12-14.

8. The method of any of Claims 1-7, further comprising separating the leached mixture to form a separated solid product and a separated liquid product, optionally wherein separating the leached mixture comprises a pressure filtration.

9. The method of Claim 8, further comprising treating the separated liquid product to form a lithium product, optionally wherein treating the separated liquid product comprises recrystallizing the lithium hydroxide.

10. The method of any of Claims 1-9, wherein the energy storage device materials are selected from the group consisting of anode scrap materials, cathode scrap materials, cell scrap manufacturing materials, cell module scrap materials, end of life device materials, electrolyte materials, and combinations thereof, optionally wherein the separated solid product comprises an element selected from the group consisting of nickel, cobalt, manganese, and combinations thereof.

11. The method of any of Claims 8 or 9, further comprising processing the separated solid product to form a purified solid product and collected impurities, wherein processing the separated solid product is selected from acid leaching, a solid liquid separation, hydrometallurgical circuit processing, and combinations thereof.

12. The method of any of Claims 1-11, wherein the raw material mixture comprises an active material selected from graphite, LFP, LMFP, NMC, NCA, LMO, LNMO, LCO, LTO, or combinations thereof.

13. A leached mixture composition formed from energy storage device materials, comprising:
a solid product comprising a metal and a carbon material, wherein the metal is selected from the group consisting of nickel, cobalt, lithium, aluminum, copper, iron, and combinations thereof; and
a liquid product comprising lithium hydroxide at a concentration of at least about 2000 ppm.

14. The leached mixture composition of Claim 13, wherein the solid product comprises a D50 particle size of about 20 microns.

15. The leached mixture composition of Claim 13 or 14, wherein a composition of the solid product comprises, in wt.%:
C: about 30 to about 60;
Li: less than about 1;
Ni: about 20 to about 50;
Mn: about 0.5 to about 3;
Co: about 1 to about 3;
Al: about 0.5 to about 3; and
Cu: about 1 to about 3.5.
